# EUROPEAN PATENT APPLICATION

(11) **EP 4 579 822 A1**
(43) Date of publication of application: **02.07.2025**
(21) Application number: 24223373.2
(22) Date of filing: 27.12.2024
(51) Int. Cl.: H01M 4/74, H01M 10/0525, H01M 10/0587

(54) **ELECTRODE ASSEMBLY FOR RECHARGEABLE LITHIUM BATTERY, ELECTRODE INCLUDED IN SAME AND RECHARGEABLE LITHIUM BATTERY INCLUDING ELECTRODE ASSEMBLY**

(30) Priority: 27.12.2023 KR 20230192250
(71) Applicant: SAMSUNG SDI CO., LTD., Yongin-si, Gyeonggi-do 17084 (KR)
(72) Inventor: Lee, Hyun Ye, 16678 Suwon-si, Gyeonggi-do (KR); Oh, Se Ryong, 16678 Suwon-si, Gyeonggi-do (KR)
(74) Representative: Michalski Hüttermann & Partner Patentanwälte mbB

(57) **Abstract**

Disclosed herein are an electrode assembly for a lithium secondary battery and a lithium secondary battery including the same. The electrode assembly includes a negative electrode including a negative electrode current collector having one end portion on which a negative electrode tab is formed and a negative electrode active material layer positioned on at least one surface of the negative electrode current collector, and a positive electrode including a positive electrode current collector having one end portion on which a positive electrode tab is formed and a positive electrode active material layer positioned on at least one surface of the positive electrode current collector, wherein, in each of the negative electrode and the positive electrode, a region with a high current density and a region with a low current density are present when a voltage is applied to the electrode assembly, and a hole area ratio in the region with a high current density is greater than that in the region with a low current density.

## Description

### CROSS-REFERENCE TO RELATED APPLICATION

The present application claims priority and the benefit of Korean Patent Application No.10-2023-0192250, filed on December 27, 2023 in the Korean Intellectual Property Office, the entire disclosure of which is incorporated herein by reference.

### BACKGROUND

### 1. Field of the Invention

The present invention relates to an electrode assembly for a lithium secondary battery, an electrodes included in the same, and a lithium secondary battery including the electrode assembly.

### 2. Discussion of Related Art

Recently, with the recent rapid spread of electronic devices that use batteries, such as mobile phones, notebook computers, and electric vehicles, the demand for secondary batteries with high energy densities and high capacities is rapidly increasing. Thus, research and development for improvement of the performance of lithium secondary batteries is actively underway.

A lithium secondary battery is a battery including a positive electrode and a negative electrode, each containing an active material capable of intercalation and deintercalation of lithium ions, and an electrolyte, and the lithium secondary battery produces electrical energy due to oxidation and reduction reactions when the lithium ions are intercalated and deintercalated from the positive electrode and the negative electrode.

A tab is provided on each of a positive electrode and a negative electrode. The tab is provided in a portion of each of the positive electrode and the negative electrode. Therefore, in the positive electrode and the negative electrode, an imbalance of a current density may occur between an area adjacent to the tab and an area not adjacent to the tab. By resolving this imbalance, a battery capacity and a battery lifetime may be improved.

### SUMMARY OF THE INVENTION

The present invention is directed to providing an electrode assembly for a lithium secondary battery, which suppresses degradation of an electrode plate, increases a battery capacity, and improves battery lifetime by resolving an imbalance of a current density on a surface of the electrode plate.

The present invention is also directed to providing an electrode included in the electrode assembly.

The present invention is also directed to providing a lithium secondary battery including the electrode assembly for a lithium secondary battery.

According to an aspect of the present invention, there is provided an electrode assembly for a lithium secondary battery, which includes a negative electrode having a negative electrode current collector having one end portion on which a negative electrode tab is formed and a negative electrode active material layer positioned on at least one surface of the negative electrode current collector, and a positive electrode having a positive electrode current collector having one end portion on which a positive electrode tab is formed and a positive electrode active material layer positioned on at least one surface of the positive electrode current collector.

In each of the negative electrode and the positive electrode, a region with a high current density and a region with a low current density may be present when a voltage is applied to the electrode assembly, and a hole area ratio in the region with a high current density may be greater than that in the region with a low current density.

According to another aspect of the present invention, there is provided an electrode included in the electrode assembly.

According to another aspect of the present invention, there is provided a lithium secondary battery including the electrode assembly for a lithium secondary battery.

The electrode assembly for a lithium secondary battery according to one embodiment can increase a battery capacity and improve a battery lifetime by resolving a current density imbalance on a surface of an electrode plate.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is an exploded view illustrating an electrode assembly for a lithium secondary battery according to one embodiment;
FIG. 2 shows diagrams illustrating regions with high current densities and regions with low current densities in a positive electrode current collector and a negative electrode current collector of FIG. 1, wherein FIG. 2A shows the positive electrode current collector, and FIG. 2B shows the negative electrode current collector;
FIG. 3 is an exemplary diagram illustrating a temperature distribution when a voltage is applied;
FIG. 4 is a conceptual diagram for describing a distribution of holes in the areas with high current densities of FIG. 2;
FIG. 5 is a conceptual diagram for describing a distribution of holes in the areas with low current densities of FIG. 2;
FIG. 6 is a conceptual diagram of an electrode assembly for a lithium secondary battery according to another embodiment, wherein FIG. 6A shows a positive electrode current collector, and FIG. 6B shows a negative electrode current collector;
FIG. 7 is a conceptual diagram of an electrode assembly for a lithium secondary battery according to still another embodiment, wherein FIG. 7A shows a positive electrode current collector, and FIG. 7B shows a negative electrode current collector; and
FIGS. 8 to 11 are schematic cross-sectional views illustrating a lithium secondary battery according to one embodiment.

### DETAILED DESCRIPTION OF EXEMPLARY EMBODIMENTS

Hereinafter, exemplary embodiments of the present invention will be described in detail. However, the following embodiments are presented by way of examples, and the present invention is not limited thereto and is defined by the scope of the appended claims.

Unless specifically stated herein, when a first portion of a layer, a film, a region, a plate, or the like is referred to as being "on" a second portion, this includes not only a case in which the first portion is "directly on" the second portion but also a case in which a third portion is present between the first portion and the second portion.

Unless specifically stated herein, the singular form may also include the plural form. In addition, unless specifically stated herein, "A or B" may mean "including A, including B, or including A and B."

The term "combination thereof' used herein may mean a mixture, stack, composite, copolymer, alloy, blend, or reaction product of components.

Unless otherwise defined herein, a particle size may be an average particle size. In addition, the particle size may be an average particle size (D50), which is a diameter of a particle with a cumulative volume of 50% by volume in a particle size distribution. The average particle size (D50) may be measured by methods well known to those skilled in the art, for example, using a particle size analyzer, a transmission electron microscope photograph, or a scanning electron microscope photograph. As another method, an average particle size (D50) value may be obtained by measuring an average particle size (D50) using a measuring instrument device using dynamic light-scattering, performing data analysis, counting the number of particles for each particle size range, and calculating the average particle size (D50). Alternatively, the average particle size (D50) may be measured using a laser diffraction method. More specifically, when the measurement is performed by a laser diffraction method, the average particle size (D50) based on 50% of the particle size distribution in the measuring instrument may be calculated by dispersing particles to be measured in a dispersion medium, introducing the particles into a commercially available laser diffraction particle size measuring instrument (for example, MT 3000 by Microtrac Inc.) and emitting ultrasonic waves of a frequency of about 28 kHz with 60 W.

In an electrode assembly for a lithium secondary battery according to one embodiment, an energy density of a cell is increased as a high capacity of a lithium secondary battery is recently required, a degree of degradation is balanced by unevenly designing an electrode plate design density for an non-uniform occurrence in a lithium ion concentration of facing surfaces of an electrode plate, coating slurry on holes of the current collector, generating a connection passage of inactivated lithium, allowing the lithium to move in two directions, thereby balancing a state of charge (SoC).

Due to the hole, the capacity of the battery is improved by 5 to 10% compared to a case in which the hole is not formed, the degradation rate is reduced due to the non-uniform design of the electrode plate, and lithium to be inactivated is minimized through the connection passage of the hole so that there may be an effect of a capacity increase.

The electrode assembly for a lithium secondary battery according to one embodiment includes a negative electrode having a negative electrode current collector having one end portion on which a negative electrode tab is formed and a negative electrode active material layer positioned on at least one surface of the negative electrode current collector; and a positive electrode having a positive electrode current collector having one end portion on which a positive electrode tab is formed and a positive electrode active material layer positioned on at least one surface of the positive electrode current collector. The negative electrode and the positive electrode each have a region with a high current density and a region with a low current density when a voltage is applied to the electrode assembly, and a hole area ratio in the region with a high current density is high compared to the region with a low current density.

In the electrode assembly for a lithium secondary battery, a hole area ratio in the region with a high current density may be increased compared to the region with a low current density so that an effective active material amount may increase, and the degree of ion transfer in two directions through the hole is increased so that the degradation rate of the positive electrode current collector and the negative electrode current collector according to the application of voltage can be reduced. The reduction of the degradation rate can increase the lifetime of the current collector according to use of the battery and increase the safety of the battery by reducing the risk of fire. In addition, in the region with a high current density, more slurry for an active material layer is coated when the active material layer is formed compared to the region with a low current density, the movement of lithium is increased through the hole, and deactivated lithium is minimized so that the capacity of the battery can be increased. In addition, by providing a uniform current density within the electrode plate, the degradation of the electrode plate is delayed so that the lifetime of the battery can be increased.

First, the region with a high current density and the region with a low current density will be described.

The region with a high current density and the region with a low current density may be relatively determined through a temperature gradient when a voltage is applied to the electrode assembly. Here, the applied voltage may range from 3 V to 4.5 V Since it is difficult to directly measure the current density for the electrode plate, in the present invention, the current density was evaluated by replacing the current density with the temperature.

When the voltage is applied, the region with a high current density may be a region of which a temperature is higher than a minimum value among temperatures measured at the positive electrode and the negative electrode as much as by 10 °C or more, for example, 10 °C to 30 °C,.

In one specific example, the region with a high current density may be a region of which a temperature is 60 °C or more, for example, 60 °C to 80 °C, when the voltage is applied. For example, the region with a high current density of the positive electrode may be a region of which a temperature ranges from 60 °C to 70 °C when the voltage is applied. For example, the region with a high current density of the negative electrode may be a region of which a temperature ranges from 70 °C to 80 °C.

When the voltage is applied, the region with a low current density may be a region of which a temperature difference is 10 °C or less, for example, a temperature difference is 0 °C or more and less than 10°C, compared to a minimum value among temperature values measured at the positive electrode and the negative electrode.

In one specific example, the region with a low current density may be a region of which a temperature is less than 60 °C, for example, 50 °C to 59 °C, when the voltage is applied.

When the voltage is applied to the current collector, the temperature may be measured after attaching an infrared camera or thermocouple to the electrode assembly or a cell including the electrode assembly, but the present invention is not limited thereto.

According to one example, the region with a high current density may be a region in which the negative electrode tab or the positive electrode tab is formed among a plurality of areas obtained by equally dividing the negative electrode and the positive electrode into n areas. Here, n may be an integer from 4 to 20, for example 4, 6, 9, 12, or 16.

Areas in which the hole area ratios are different from each other may be present in the region with a high current density, and areas in which the hole area ratios are different from each other may be present in the region with a low current density.

According to one example, the region with a low current density may be the remaining areas of the negative electrode and the positive electrode excluding the region with the high current density.

In one specific example, the region with a high current density of the positive electrode may range from 5% to 50%, for example, 10% to 30%, or 10% to 25% of the positive electrode area including holes.

In one specific example, the region with a high current density of the negative electrode may range from 5% to 50%, for example, 10% to 30%, or 10% to 25% of the negative electrode area including holes.

Next, the hole area ratio will be described.

In the present specification, a "hole area ratio" is defined as the ratio of the sum of hole areas in the unite area per unit area, wherein the "unit area" may be width×height (1 mm×1 mm).

In the present specification the overall hole area ratio refers to the hole area ratio in a predefined area. When an area of the region with a high current density including the holes is A, and the total sum of hole areas is B, the hole area ratio of the region with a high current density may be calculated by B/A×100.

In the hole area ratio in the region with a low current density, when an area of the region with a low current density including the holes is C, and the total sum of hole areas is D, a porosity may be calculated by D/C×100.

According to one example, in the region with a high current density, the hole area ratio may be 15% or more, for example, 15% to 50%, or 20% to 35% higher than that of the region with a low current density.

According to one example, the hole area ratio in the region with a high current density may range from 20% to 40%, for example, 20% to 30%. A hole area ratio in the region with a low current density may range from 0% to 10%, for example, 0% to 5%. In the above ranges, the degradation of the current collector can be suppressed and the degree of decrease in battery capacity due to hole formation can be reduced.

In one specific example, when the current collector is equally divided into n areas (where n is an integer from 4 to 20, for example 4, 6, 9, 12, or 16), the region with a high current density may be one region having one area or may have a plurality of regions having the same area. In this case, when the region with a high current density is a plurality of regions having the same area, the hole area ratio ranging from 20% to 40% may be an average value of the hole area ratio calculated for the same area. The hole area ratios calculated for the same area may be different from each other or may be the same.

In one specific example, when the current collector is equally divided into n areas (where n is an integer from 4 to 20, for example 4, 6, 9, 12, or 16), the region with a low current density may be one region having one area or may have a plurality of regions having the same area. In this case, when the region with a low current density is a plurality of regions having the same area, the hole area ratio ranging from 0% to 10% may be an average value of the hole area ratio calculated for the same area. The hole area ratios calculated for the same area may be different from each other or may be the same.

In one specific example, the hole area ratio in the region with a high current density of the negative electrode may be higher than the hole area ratio in the region with a high current density in the positive electrode. This is due to the fact that when the same voltage is applied to the positive electrode and the negative electrode, the temperature around a tab of the negative electrode current collector is higher than that around a tab of the positive electrode current collector. In this way, the electrode assembly can significantly reduce the degradation rate of the current collector, thereby increasing the safety and lifetime of the battery.

For example, in the region with a high current density of the negative electrode, the hole area ratio may be higher than that in the region with a high current density of the positive electrode as much as by 5% or more, for example, 5% to 20% or 5% to 10%. In the above ranges, the degradation rates of both the positive electrode and the negative electrode can be significantly lowered, and the lifetime of the battery can be improved to a greater extent.

In one specific example, in the electrode assembly, holes are formed in the positive electrode current collector and the negative electrode current collector, and no holes are formed in the positive electrode active material layer and the negative electrode active material layer.

In one specific example, in the electrode assembly, a hole area ratio of the positive electrode in a region from the positive electrode tab to a point of 40% of a length in a length direction of the electrode assembly may range from 20% to 40%, and a hole area ratio of the remaining region may range from 0% to 10%.

In one specific example, in the electrode assembly, a hole area ratio of the negative electrode in a region from the negative electrode tab to a point of 40% of a length in a length direction of the electrode assembly may range from 20% to 40%, and a hole area ratio of the remaining region may range from 0% to 10%.

In each of the region with a high current density and the region with a low current density, the hole area ratio may be implemented by adjusting a diameter of the hole and/or a density of the holes.

In the present specification, the "'hole" may be a region with the longest diameter of 300 µm or less, for example, greater than 0 µm and 300 µm or less, or ranging from 1 µm to 300 µm, 100 µm to 300 µm, or 200 µm to 300 µm, and the inside of the hole may be hollow. When a cross section of the hole is a circular shape, the "longest diameter" may be a diameter and, when the cross section of the hole is not the circular shape, the "longest diameter" may be the longest diameter.

Holes are formed in the region with a high current density. Diameters of the holes in the region with a high current density may be the same or different from each other.

Holes may or may not be formed in the region with a low current density. Diameters of the holes in the region with a low current density may be the same or different from each other.

The diameters of the holes in the region with a high current density may be the same as or different from those of the holes in the region with a low current density.

In one specific example, the diameters of the holes in the region with a high current density may be the same as those of the holes in the region with a low current density.

In another specific example, the diameters of the holes in the region with a high current density may be less than those of the holes in the region with a low current density.

In still another specific example, the diameters of the holes in the region with a high current density may be greater than those of the holes in the region with a low current density.

In one specific example, the diameter of the hole may become smaller from the region with a high current density to the region with a low current density.

In one specific example, the diameter of the hole may become greater from the region with a high current density to the region with a low current density.

In one specific example, a cross section of the hole may have a circular shape, an elliptical shape, an amorphous shape.

In one specific example, the hole may be a through-hole passing through from one surface of the current collector to the other surface opposite to the one surface.

In one specific example, the longest diameter of the hole may be 10 to 20 times, for example, 10 to 15 times a thickness of the current collector. In the above ranges, the effect of the present invention can be easily implemented.

In the present specification, a "hole density" may be a ratio of the number of holes per unit area of a corresponding region, and here the "unit area" may be width×height (1 mm×1 mm).

In the present specification the overall hole density refers to the hole density in a predefined area. In one specific example, the overall hole density in the region with the high current density may be higher than the overall hole density in the region with the low current density.

In one specific example, the hole density may decrease from the region with a high current density to the region with a low current density.

In one specific example, the hole may be formed by the conventional method known to those skilled in the art. For example, the hole may be formed by physical punching, etching, or stamping.

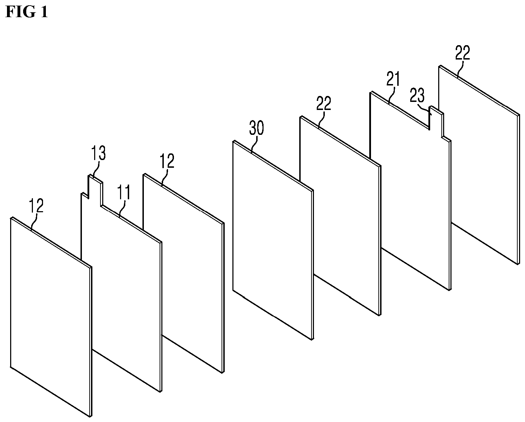

FIG. 1 is an exploded view illustrating an electrode assembly for a lithium secondary battery according to one embodiment.

Referring to FIG. 1, the electrode assembly for a lithium secondary battery includes a positive electrode having a positive electrode current collector 11 and a positive electrode active material layer 12 positioned on one surface of the positive electrode current collector 11, and a negative electrode having a negative electrode current collector 21 and a negative electrode active material layer 22 positioned on one surface of the negative electrode current collector 21.

A positive electrode tab 13 is formed at one end portion of the positive electrode current collector 11. A negative electrode tab 23 is formed at one end portion of the negative electrode current collector 21. The positive electrode tab 13 and the negative electrode tab 23 are formed not to face each other.

A positive electrode active material layer 12 may be further formed on the other surface of the positive electrode current collector 11. A negative electrode active material layer 22 may be further formed on the other surface of the negative electrode current collector 21.

A separator 30 may be further formed between the positive electrode active material layer 12 and the negative electrode active material layer 22.

The positive electrode active material layer 12, the negative electrode active material layer 22, and the separator 30 may be impregnated with an electrolyte (not shown in FIG. 1).

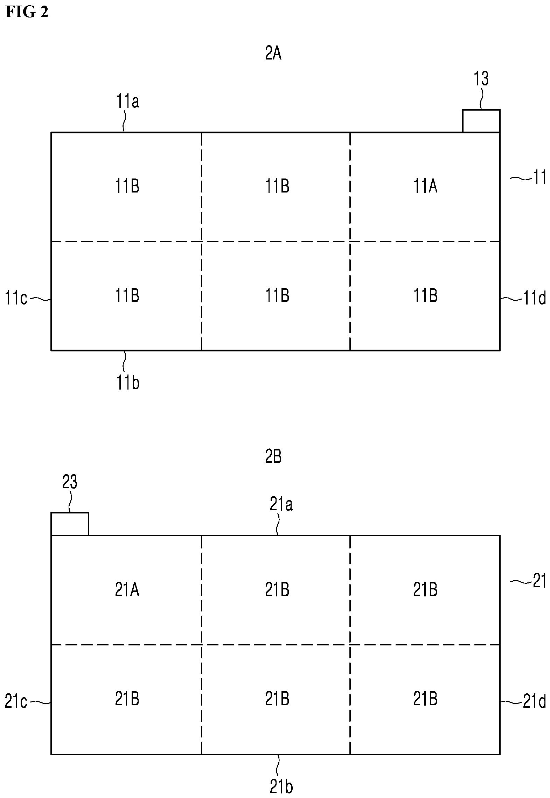

FIG. 2 shows diagrams illustrating regions with high current densities and regions with low current densities in a positive electrode current collector and a negative electrode current collector when a voltage is applied to the electrode assembly of FIG. 1.

Referring to FIG. 2A, the positive electrode current collector may be equally divided into six regions. Among the six regions, a region 11A with a high current density may be a region in which the positive electrode tab is formed, and regions 11B with a low current density may be the remaining regions excluding the region with a high current density of the positive electrode current collector.

Referring to FIG. 2B, the negative electrode current collector may be equally divided into six regions. Among the six regions, a region with a high current density may be a region in which the negative electrode tab is formed, and the regions with a low current density may be the remaining regions excluding the region with a high current density of the negative electrode current collector.

For example, as shown in FIG. 2A, a surface on which the positive electrode tab 13 is formed is one surface 11a of the positive electrode current collector, a surface opposite to the one surface 11a of the positive electrode current collector is the other surface 11b, and surfaces connecting the one surface 11a and the other surface 11b are a first side surface 11c and a second surface 11d. In the positive electrode current collector, the one surface (or the other surface) may be equally divided into three regions, the first side surface (or the second side surface) may be equally divided into two regions, and thus six regions 11A and 11B may be obtained. Among six regions 11A and 11B, the region 11A in which the positive electrode tab is formed may be the region with a high current density.

For example, as shown in FIG. 2B, a surface on which the negative electrode tab is formed is one surface 21a of the negative electrode current collector, a surface opposite to the one surface 21a of the negative electrode current collector is the other surface 21b, and surfaces connecting the one surface 21a and the other surface 21b are a first side surface 21c and a second surface 21d. In the negative electrode current collector, the one surface (or the other surface) may be equally divided into three regions, the first side surface (or the second side surface) may be equally divided into two regions, and thus six regions 21A and 21B may be obtained. Among six regions 21A and 21B, a region in which the negative electrode tab is formed may be the region 21A with a high current density.

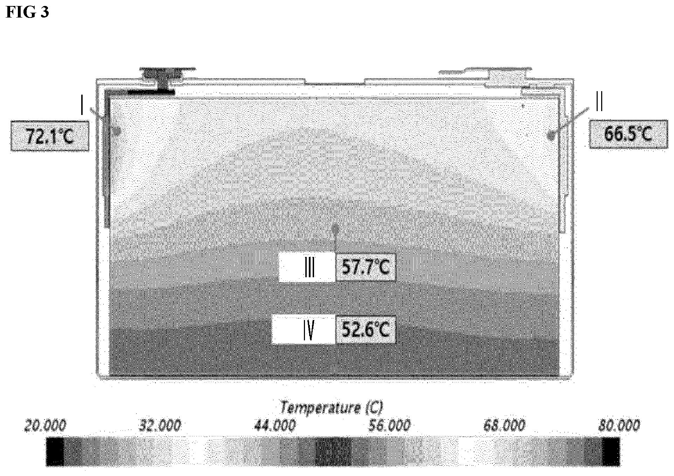

FIG. 3 is an exemplary diagram illustrating a temperature distribution when a voltage is applied to the electrode assembly of FIG. 1.

Referring to FIG. 3, it can be confirmed that a temperature of a positive electrode tab region (II) was 66.5 °C and a temperature of a negative electrode tab region (I) was 72.1 °C, whereas a temperature of a bottom portion (IV) was 52.6 °C and a temperature of a central portion (III) was 57.7 °C, and thus a temperature gradient occurred.

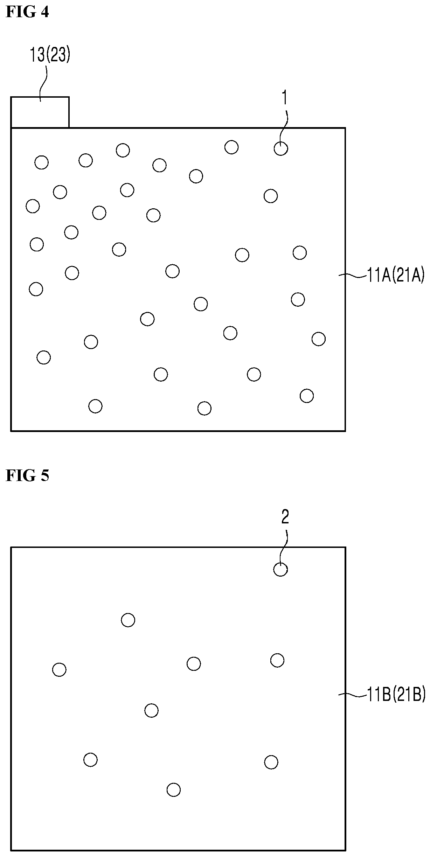

FIG. 4 is a conceptual diagram for describing a distribution of holes 1 in the regions 11A and 21A with a high current density in FIG. 2. FIG. 5 is a conceptual diagram for describing a distribution of holes 2 in the regions 11B and 21B with a low current density in FIG. 2.

Referring to FIGS. 4 and 5, a gap distance between the holes in the region with a high current density may be narrower than that in the region with a low current density. In addition, referring to FIG. 4, in the region with a high current density, the gap distance between the holes may become small toward the positive electrode tab or the negative electrode tab.

In one specific example, the gap distance between the holes in the region with a high current density may be the same or different and may be 50 µm or less, for example, 10 µm to 40 µm. In one specific example, the gap distance between the holes in the region with a low current density may be the same or different and may be 100 µm or less, for example, 100 µm to 500 µm. Here, the "gap distance" means a gap distance between on hole and the nearest hole for the one hole.

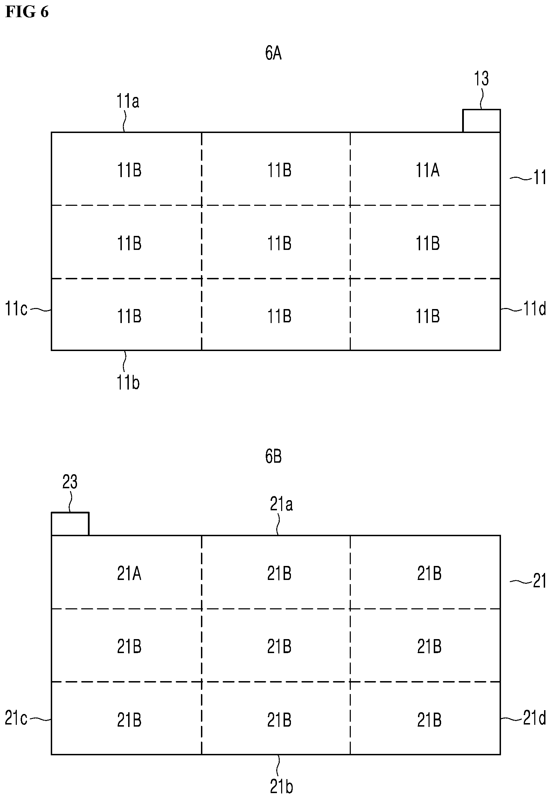

FIG. 6 is a conceptual diagram of an electrode assembly for a lithium secondary battery according to another embodiment.

Referring to FIG. 6A, the positive electrode current collector may be equally divided into nine regions. Among the nine regions, a region with a high current density may be a region in which the positive electrode tab is formed, and regions with a low current density may be the remaining regions excluding the region with a high current density of the positive electrode current collector.

Referring to FIG. 6B, the negative electrode current collector may be equally divided into nine regions. Among the nine regions, a region with a high current density may be a region in which the negative electrode tab is formed, and regions with a low current density may be the remaining regions excluding the region with a high current density of the negative electrode current collector.

For example, as shown in FIG. 6A, a surface on which the positive electrode tab 13 is formed is one surface 11a of the positive electrode current collector 11, a surface opposite to the one surface 11a of the positive electrode current collector 11 is the other surface 11b, and surfaces connecting the one surface 11a and the other surface 11b are a first side surface 11c and a second surface 11d. In the positive electrode current collector, the one surface (or the other surface) may be equally divided into three regions, the first side surface (or the second side surface) may be equally divided into three regions, and thus nine regions 11A and 11B may be obtained. Among the nine regions 11A and 11B, a region 11A in which the positive electrode tab is formed may be the region with a high current density.

For example, as shown in FIG. 6B, a surface on which the negative electrode tab 23 is formed is one surface 21a of the negative electrode current collector 21, a surface opposite to the one surface 21a of the positive electrode current collector 21 is the other surface 21b, and surfaces connecting the one surface 21a and the other surface 21b are a first side surface 21c and a second surface 21d. In the negative electrode current collector, the one surface (or the other surface) may be equally divided into three regions, the first side surface (or the second side surface) may be equally divided into three regions, and thus nine regions 21A and 21B may be obtained. Among the nine regions 21A and 11B, the region 2 1A in which the positive electrode tab is formed may be the region with a high current density.

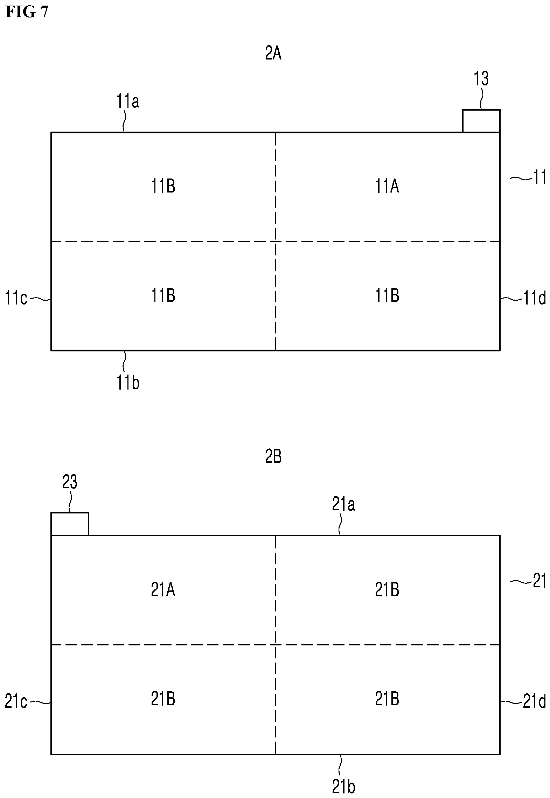

FIG. 7 is a conceptual diagram of an electrode assembly for a lithium secondary battery according to still another embodiment.

Referring to FIG. 7A, the positive electrode current collector may be equally divided into four regions. Among the four regions, a region with a high current density may be a region in which the positive electrode tab is formed, and regions with a low current density may be the remaining regions excluding the region with a high current density of the positive electrode current collector.

Referring to FIG. 7B, the negative electrode current collector may be equally divided into four regions. Among the four regions, a region with a high current density may be a region in which the negative electrode tab is formed, and regions with a low current density may be the remaining regions excluding the region with a high current density of the negative electrode current collector.

For example, as shown in FIG. 7A, a surface on which the positive electrode tab 13 is formed is one surface 11a of the positive electrode current collector 11, a surface opposite to the one surface 11a of the positive electrode current collector 11 is the other surface 11b, and surfaces connecting the one surface 11a and the other surface 11b are a first side surface 11c and a second surface 11d. In the positive electrode current collector, the one surface (or the other surface) may be equally divided into two regions, the first side surface (or the second side surface) may be equally divided into two regions, and thus four regions 11A and 11B may be obtained. Among the nine regions 11A and 11B, a region 11A in which the positive electrode tab is formed may be the region with a high current density.

For example, as shown in FIG. 7B, a surface on which the negative electrode tab 23 is formed is one surface 21a of the negative electrode current collector 21, a surface opposite to the one surface 21a of the positive electrode current collector 21 is the other surface 21b, and surfaces connecting the one surface 21a and the other surface 21b are a first side surface 21c and a second surface 21d. In the negative electrode current collector, the one surface (or the other surface) may be equally divided into two regions, the first side surface (or the second side surface) may be equally divided into two regions, and thus four regions 21A and 21B may be obtained. Among the four regions 21A and 11B, the region 21A in which the positive electrode tab is formed may be the region with a high current density.

Hereinafter, each component of the electrode assembly will be described in detail.

### Positive electrode current collector and positive electrode active material layer

The positive electrode for a lithium secondary battery may include the positive electrode current collector and a positive electrode active material layer formed on the positive electrode current collector.

The positive electrode active material layer includes a positive electrode active material and may further include a binder and/or a conductive material. As an example, the positive electrode may further include an additive that serves as a sacrificial positive electrode.

A content of the positive electrode active material may range from 90 wt% to 99.5 wt% based on 100 wt% of the positive electrode active material layer, and contents of the binder and the conductive material may range from 0.5 wt% to 5 wt% based on 100 wt% of the positive electrode active material layer.

A compound capable of reversible intercalation and deintercalation of lithium (lithiated intercalation compound) may be used as the positive electrode active material. Specifically, one or more of composite oxides of lithium and a metal selected from cobalt, manganese, nickel, and a combination thereof may be used.

The composite oxide may be a lithium transition metal composite oxide, and as a specific example, the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<a<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001<b<0.1); LiₐCoG_{b}O₂ (0.90≤a≤1.8, 0.001<b<0.1); LiₐM_{n1-b}G_{b}O₂(0.90≤a≤1.8, 0.001≤b≤0.1); LiₐMn₂G_{b}O₄(0.90≤a≤1.8, 0.001≤b≤0.1); LiₐM_{n1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas, A denotes Ni, Co, Mn, or a combination thereof, X denotes Al, Ni, Co, Mn, Cr, Fe, Mg, Sr, V, a rare earth element, or a combination thereof, D denotes O, F, S, P, or a combination thereof, G denotes Al, Cr, Mn, Fe, Mg, La, Ce, Sr, V, or a combination thereof, and L¹ denotes Mn, Al, or a combination thereof.

As an example, the positive electrode active material may be a high nickel-based positive electrode active material in which a nickel content is 80 mol% or more, 85 mol% or more, 90 mol% or more, 91 mol% or more, 94 mole%, or 99 mol% or less based on 100 mol% of metals excluding lithium in a lithium transition metal composite oxide. The high nickel-based positive electrode active material may implement a high capacity and may be applied to high-capacity, high-density lithium secondary batteries.

The positive electrode active material layer includes a positive electrode active material and may further include a binder and/or a conductive material.

The binder serves to adhere positive electrode active material particles to each other and also to adhere the positive electrode active material to a current collector. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, and a polymer containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present invention is not limited thereto.

The conductive material is used to provide conductivity to the electrode, and in the battery being constructed, any electronically conductive material can be used as long as it does not cause a chemical change. Examples of the conductive material may include: carbon-based materials such as natural graphite, artificial graphite, carbon black, acetylene black, Ketjen black, carbon fiber, carbon nanofiber, and carbon nanotube; metal-based materials in the form of metal powder or metal fiber containing copper, nickel, aluminum, and silver; a conductive polymer such as polyphenylene derivative; or a mixture thereof.

An Al thin film or aluminum foil may be used as the positive electrode current collector, but the present invention is not limited thereto.

### Negative electrode current collector and negative electrode active material layer

The electrode for a lithium secondary battery may include the negative electrode current collector and a negative electrode active material layer formed on the negative electrode current collector. The negative electrode active material layer includes a negative electrode active material and may further include a binder and/or a conductive material.

For example, the negative electrode active material layer may include 90 wt% to 99 wt% negative electrode active material, 0.5 wt% to 5 wt% binder, and 0 wt% to 5 wt% conductive material.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating lithium ions is a carbon-based negative electrode active material and may include, for example, crystalline carbon, amorphous carbon, or a combination thereof. Examples of the crystalline carbon may include graphite such as amorphous, plate-shaped, flake, spherical or fibrous natural graphite or artificial graphite, and examples of the amorphous carbon may include soft carbon or hard carbon, and mesophase pitch carbide, and calcined coke.

An alloy of lithium and a metal selected from Na, K, Rb, Cs, Fr, Be, Mg, Ca, Sr, Si, Sb, Pb, In, Zn, Ba, Ra, Ge, Al and Sn may be used as the alloy of lithium metal.

A Si-based negative electrode active material or a Sn-based negative electrode active material may be used as the material capable of doping and dedoping lithium. The Si-based negative electrode active material may be silicon, silicon-carbon composite, SiOₓ (0<x<2), a Si-Q alloy (Q is an alkali metal), alkaline earth metal, a group 13 element, a group 14 element (excluding Si) ), a group 15 element, a group 16 element, a transition metal, a rare earth elements, or a combination thereof. The Sn-based negative electrode active material may be Sn, SnO₂, a Sn-based alloy, or a combination thereof.

The silicon-carbon composite may be a composite of silicon and amorphous carbon. According to one example, the silicon-carbon composite may be in the form of silicon particles and amorphous carbon applied on surfaces of the silicon particles. For example, the silicon-carbon composite may include a secondary particle (core) in which silicon primary particles are combined and an amorphous carbon coating layer (shell) positioned on a surface of the secondary particle. The amorphous carbon may also be positioned between the silicon primary particles and, for example, the silicon primary particles may be coated with amorphous carbon. The secondary particles may be present by being dispersed in an amorphous carbon matrix.

The silicon-carbon composite may further include crystalline carbon. For example, the silicon-carbon composite may include a core containing crystalline carbon and silicon particles and an amorphous carbon coating layer positioned on a surface of the core.

The Si-based negative electrode active material or the Sn-based negative electrode active material may be used by being mixed with a carbon-based negative electrode active material.

The binder serves to adhere negative electrode active material particles to each other and also to adhere the negative electrode active material to a current collector. A non-aqueous binder, an aqueous binder, a dry binder, or a combination thereof may be used as the binder.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, and a combination thereof.

The aqueous binder may be one selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, Poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

When the aqueous binder is used as s negative electrode binder, a cellulose-based compound capable of imparting viscosity may be further included. One or more of carboxymethyl cellulose, hydroxypropylmethyl cellulose, methyl cellulose, or alkali metal salts thereof can be mixed and used as the cellulose-based compound. Na, K, or Li may be used as the alkali metal.

The dry binder is a polymer material capable of being fiberized and may be, for example, polytetrafluoroethylene, polyvinylidene fluoride, polyvinylidene fluoride-hexafluoropropylene copolymer, polyethylene oxide, or a combination thereof.

The conductive material is used to provide conductivity to the electrode, and in the battery being constructed, any electronically conductive material can be used as long as it does not cause a chemical change. Specific examples of the conductive material may include: carbon-based materials such as natural graphite, artificial graphite, carbon black, acetylene black, Ketjen black, carbon fiber, carbon nanofiber, and carbon nanotube; metal-based materials in the form of metal powder or metal fiber containing copper, nickel, aluminum, and silver; a conductive polymer such as polyphenylene derivative; or a mixture thereof.

One selected from copper foil, nickel foil, stainless steel foil, titanium foil, nickel foam, copper foam, a polymer substrate coated with a conductive metal, and a combination thereof may be used as the negative electrode current collector.

### Electrolyte

An electrolyte for a lithium secondary battery contains a non-aqueous organic solvent and lithium salt.

The non-aqueous organic solvent serves as a medium through which ions involved in an electrochemical reaction of the battery may move.

The non-aqueous organic solvent may be a carbonate-based, ester-based, ether-based, ketone-based, or alcohol-based solvent, an aprotic solvent, or a combination thereof.

Dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC) may be used as the carbonate-based solvent.

Methyl acetate, ethyl acetate, n-propyl acetate, dimethyl acetate, methyl propionate, ethyl propionate, decanolide, mevalonolactone, valerolactone, or caprolactone may be used as the ester-based solvent.

Dibutyl ether, tetraglyme, diglyme, dimethoxyethane, 2-methyltetrahydrofuran, 2,5-dimethyltetrahydrofuran, or tetrahydrofuran may be used as the ether-based solvent. In addition, cyclohexanone may be used as the ketone-based solvent. Ethyl alcohol or isopropyl alcohol may be used as the alcohol-based solvent, and nitrile such as R-CN (R is a straight-chain, branched, or ring-structured hydrocarbon group having 2 to 20 carbon atoms and may include a double bond, an aromatic ring, or an ether group), amide such as dimethylformamide, dioxolanes such as 1,3-dioxolane and 1,4-dioxolane, or sulfolane may be used as the aprotic solvent.

The non-aqueous organic solvents may be used alone or in combination of two or more thereof.

In addition, when the carbonate-based solvent is sued, cyclic carbonate and chain carbonate may be mixed and used, and the cyclic carbonate and the chain carbonate may be mixed at a volume ratio of 1:1 to 1:9.

The lithium salt is a material that is dissolved in an organic solvent and acts as a source of lithium ions in the battery to enable a basic operation of a lithium secondary battery and tp promote movement of lithium ions between the positive electrode and the negative electrode. Representative examples of the lithium salt may include one or two or more selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LIBOB).

### Separator

A separator may be present between the positive electrode and the negative electrode depending on a type of lithium secondary battery. Polyethylene, polypropylene, polyvinylidene fluoride, or a multilayer membrane of two or more layers thereof may be used as the separator. Of course, mixed multilayer membranes such as a polyethylene/polypropylene two-layer separator, a polyethylene/polypropylene/polyethylene three-layer separator, and a polypropylene/polyethylene/polypropylene three-layer separator may be used.

The separator may include a porous base material and a coating layer containing an organic material, an inorganic material, or a combination thereof positioned on one or both surfaces of the porous base material.

The porous base material may be any one polymer selected from polyolefin such as polyethylene and polypropylene, polyester such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, cyclic olefin copolymer, polyphenylene sulfide, polyethylene naphthalate, glass fiber, Teflon, and polytetrafluoroethylene, or a polymer membrane formed from a copolymer or mixture of two or more thereof.

The organic material may include a polyvinylidene fluoride-based polymer or a (meth)acrylic-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic material and the inorganic material may be mixed in one coating layer or may be present in a stacked form of a coating layer containing the organic material and a coating layer containing the inorganic material.

In another example, an electrode included in the electrode assembly for a lithium secondary battery is provided.

In one specific example, the electrode may be the positive electrode for a lithium secondary battery.

In one specific example, the electrode for a lithium secondary battery may include the current collector and the positive electrode active material layer positioned on at least one surface of the current collector. As described above, in the current collector, a region with a high current density and a region with a low current density are present, and a hole area ratio in the region with a high current density is greater than that in the region with a low current density. Since this is substantially the same as described above, a detailed description will be omitted herein.

In another specific example, the electrode may be the negative electrode for a lithium secondary battery.

In another specific example, the electrode for a lithium secondary battery may include the current collector and the positive electrode active material layer positioned on at least one surface of the current collector. As described above, in the current collector, a region with a high current density and a region with a low current density are present, and a hole area ratio of the region with a high current density is greater than that of the region with a low current density. Since this is substantially the same as described above, a detailed description will be omitted herein.

In still another example, a lithium secondary battery including the electrode assembly for a lithium secondary battery is provided.

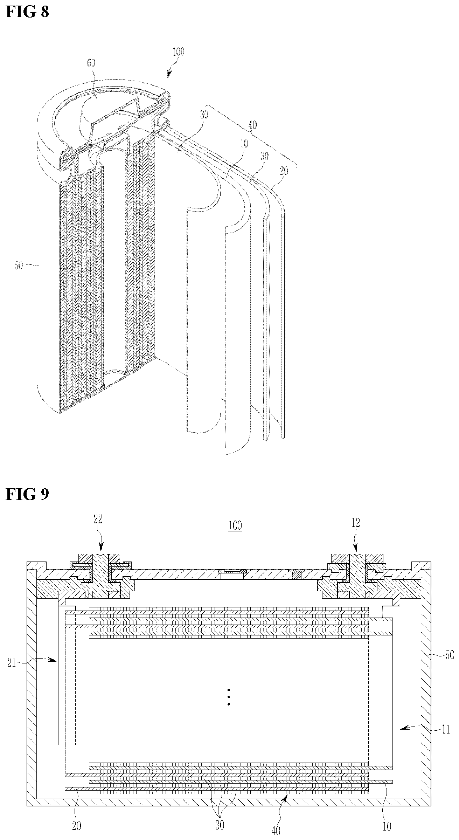

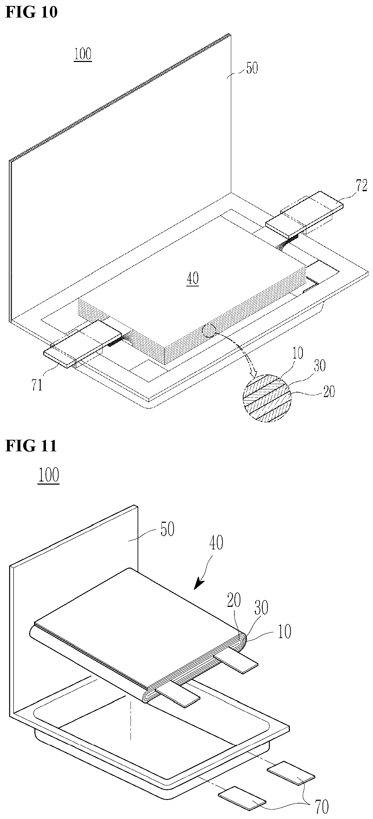

The lithium secondary battery may be classified into a cylindrical battery, a prismatic battery, a pouch battery, and a coin battery according to a battery shape. FIGS. 8 to 11 are schematic diagrams illustrating lithium secondary batteries according to one embodiment, FIG. 8 shows a cylindrical battery, FIG. 9 shows a prismatic - battery, and FIGS. 10 and 11 show a pouch battery. Referring to FIGS. 8 to 11, a lithium secondary battery 100 may include an electrode assembly 40 with a separator 30 interposed between a positive electrode 10 and a negative electrode 20, and a case 50 in which the electrode assembly 40 is embedded. The positive electrode 10, the negative electrode 20, and the separator 30 may be impregnated with an electrolyte (not shown). As shown in FIG. 8, the lithium secondary battery 100 may include a sealing member 60 for sealing the case 50. In addition, in FIG. 9, the lithium secondary battery 100 may include a positive electrode lead tab 11, a positive electrode terminal 12, a negative electrode lead tab 21, and a negative electrode terminal 22. As shown in FIGS. 10 and 11, the lithium secondary battery 100 may include an electrode tab 70, that is, a positive electrode tab 71 and a negative electrode tab 72, which serves as an electrical passage for guiding a current formed in the electrode assembly 40 to the outside.

The lithium secondary battery according to one embodiment of the present invention can be applied to vehicles, mobile phones, and/or various types of electrical devices, and the present invention is not limited thereto.

Hereinafter, examples of the present invention and comparative examples will be described. However, the following examples are merely examples of the present invention, and thus the present invention is not limited to the following examples.

### Example 1

### Positive electrode current collector manufacturing

A plurality of holes were formed in aluminum foil (with a thickness of 20 µm) using a punching method. The holes had the same diameter of 250 µm, and a cross section of the hole had a circular shape. The positive electrode current collector of FIG. 2A was manufactured by adjusting a hole area ratio in a region in which a tab was expected to be attached to the aluminum foil to 30% and hole area ratios in the remaining regions, excluding the region in which the tab was expected to be attached to the aluminum foil, to 10%.

### Positive electrode manufacturing

A positive electrode active material slurry was prepared by mixing 97 wt% LiCoO₂, 1.5 wt% carbon black powder as a conductive material, and 1.5 wt% polyvinylidene fluoride (PVdF), putting the mixture into an N-methyl-2-pyrrolidone solvent, and stirring the mixture and the N-methyl-2-pyrrolidone solvent for 30 minutes using a mechanical stirrer. The positive electrode was manufactured by coating the manufactured aluminum current collector with the slurry using a doctor blade, drying the slurry in a hot air dryer at a temperature of 100 °C for 0.5 hours, drying the slurry again for 4 hours under a vacuum condition at a temperature of 120 °C, and roll pressing the aluminum current collector coated with the slurry.

### Negative electrode current collector manufacturing

A plurality of holes were formed in copper foil (with a thickness of 20 µm) using a punching method. The holes had the same diameter of 250 µm, and a cross section of the hole had a circular shape. The negative electrode current collector of FIG. 2B was manufactured by adjusting a hole area ratio in a region in which a tab was expected to be attached to the copper foil to 40% and hole area ratios in the remaining regions, excluding the region in which the tab was expected to be attached to the copper foil, to 10%.

### Negative electrode manufacturing

A negative electrode for a lithium secondary battery was manufactured by coating the manufactured negative electrode current collector with a negative electrode active material slurry and drying the negative electrode active material slurry. The negative electrode active material slurry was prepared by mixing 97 wt% graphite particles with an average particle diameter of 25 µm, 1.5 wt% styrene-butadiene rubber (SBR) binder, and 1.5 wt% carboxymethyl cellulose (CMC), putting the mixture into distilled water, and stirring the mixture and the distilled water for 60 minutes using a mechanical stirrer.

### Battery manufacturing

An electrode assembly jelly roll was prepared by interposing the separator between the positive electrode and the negative electrode, which were manufactured as described above, and winding an electrode assembly. The jelly roll was inserted into a pouch, an electrolyte was injected into the pouch, and the pouch was vacuum sealed. The electrolyte in which 1.3 M LiPF₆ was dissolved in a mixed solvent of EC, EMC, and DEC at a volume ratio of 3:5:2 was used. A lithium secondary battery was manufactured by pressing the jelly roll inserted in the pouch at a temperature of 80 °C for 3 minutes while applying a pressure of 11.7 kgf/cm².

A current density was evaluated relative to a temperature distribution when a voltage of 4.5 V was applied to the manufactured battery. A current density ratio of a region in which a hole area ratio was 30% of the positive electrode current collector to a region in which a hole area ratio was 10% of the positive electrode current collector was 2:1. A current density ratio of a region in which a hole area ratio was 40% of the negative electrode current collector to a region in which a hole area ratio was 10% of the negative electrode current collector was 2:1. A current density imbalance is resolved as the current density ratio becomes low so that degradation of the electrode plate can be suppressed, a battery capacity can be increased, and a battery lifetime can be improved. According to Example 1, the current density ratio is low so that degradation of the electrode plate can be suppressed, a battery capacity can be increased, and a battery lifetime can be improved.

### Example 2

### Positive electrode current collector manufacturing

A plurality of holes were formed in aluminum foil (with a thickness of 20 µm) using a punching method. The holes had the same diameter of 250 µm, and a cross section of the hole had a circular shape. The positive electrode current collector of FIG. 2A was manufactured by adjusting a hole area ratio in a region in which a tab was expected to be attached to the aluminum foil to 30% and hole area ratios in the remaining regions, excluding the region in which the tab was expected to be attached to the aluminum foil, to 5%.

### Negative electrode current collector manufacturing

A plurality of holes were formed in copper foil (with a thickness of 20 µm) using a punching method. The holes had the same diameter of 250 µm, and a cross section of the hole had a circular shape. The negative electrode current collector of FIG. 2B was manufactured by adjusting a hole area ratio in a region in which a tab was expected to be attached to the copper foil to 40% and hole area ratios in the remaining regions, excluding the region in which the tab was expected to be attached to the copper foil, to 5%.

A lithium secondary battery was manufactured in the same manner as in Example 1 using the manufactured current collector.

A current density was evaluated relative to a temperature distribution when a voltage of 4.5 V was applied to the manufactured battery. A current density ratio of a region in which a hole area ratio was 30% of the positive electrode current collector to a region in which a hole area ratio was 5% of the positive electrode current collector was 2: 1. A current density ratio of a region in which a hole area ratio was 40% of the negative electrode current collector to a region in which a hole area ratio was 5% of the negative electrode current collector was 2: 1. According to Example 1, the current density ratio is low so that degradation of the electrode plate can be suppressed, a battery capacity can be increased, and a battery lifetime can be improved.

### Example 3

### Positive electrode current collector manufacturing

A plurality of holes were formed in aluminum foil (with a thickness of 20 µm) using a punching method. A cross section of the hole had a circular shape. A hole area ratio in a region in which a tab was expected to be attached to the aluminum foil was 30%, and a diameter of the hole was 300 µm or less. A hole area ratio in the remaining region, excluding the above region, was 5%, and a diameter of the hole was 300 µm or less. In this case, the diameter of the hole in the region in which the tab was expected to be attached was greater than the diameter of the hole in the remaining region excluding the above region.

### Negative electrode current collector manufacturing

A plurality of holes were formed in copper foil (with a thickness of 20 µm) using a punching method. The holes had the same diameter of 250 µm, and a cross section of the hole had a circular shape. A hole area ratio in a region in which a tab was expected to be attached to the copper foil was 30%, and a diameter of the hole was 300 µm or less. A hole area ratio in the remaining region, excluding the above region, was 5%, and a diameter of the hole was 300 µm or less. In this case, the diameter of the hole in the region in which the tab was expected to be attached was greater than the diameter of the hole in the remaining region excluding the above region.

A lithium secondary battery was manufactured in the same manner as in Example 1 using the manufactured current collector.

A current density was evaluated relative to a temperature distribution when a voltage of 4.5 V was applied to the manufactured battery. A current density ratio of a region in which a hole area ratio was 30% of the positive electrode current collector to a region in which a hole area ratio was 5% of the positive electrode current collector was 2: 1. A current density ratio of a region in which a hole area ratio was 40% of the negative electrode current collector to a region in which a hole area ratio was 5% of the negative electrode current collector was 2: 1. According to Example 1, the current density ratio is low so that degradation of the electrode plate can be suppressed, a battery capacity can be increased, and a battery lifetime can be improved.

### Example 4

### Positive electrode current collector manufacturing

A plurality of holes were formed in aluminum foil (with a thickness of 20 µm) using a punching method. A cross section of the hole had a circular shape. A hole area ratio in a region in which a tab was expected to be attached to the aluminum foil was 30%, and a diameter of the hole was 300 µm or less. A hole area ratio in the remaining region, excluding the above region, was 5%, and a diameter of the hole was 300 µm or less. In this case, the diameter of the hole in the region in which the tab was expected to be attached was smaller than the diameter of the hole in the remaining region excluding the above region.

### Negative electrode current collector manufacturing

A plurality of holes were formed in copper foil (with a thickness of 20 µm) using a punching method. The holes had the same diameter of 250 µm, and a cross section of the hole had a circular shape. A hole area ratio in a region in which a tab was expected to be attached to the copper foil was 30%, and a diameter of the hole was 300 µm or less. A hole area ratio in the remaining region, excluding the above region, was 5%, and a diameter of the hole was 300 µm or less. In this case, the diameter of the hole in the region in which the tab was expected to be attached was smaller than the diameter of the hole in the remaining region excluding the above region.

A lithium secondary battery was manufactured in the same manner as in Example 1 using the manufactured current collector.

A current density was evaluated relative to a temperature distribution when a voltage of 4.5 V was applied to the manufactured battery. A current density ratio of a region in which a hole area ratio was 30% of the positive electrode current collector to a region in which a hole area ratio was 5% of the positive electrode current collector was 2: 1. A current density ratio of a region in which a hole area ratio was 40% of the negative electrode current collector to a region in which a hole area ratio was 5% of the negative electrode current collector was 2: 1. According to Example 1, the current density ratio is low so that degradation of the electrode plate can be suppressed, a battery capacity can be increased, and a battery lifetime can be improved.

### Comparative Example 1

### Positive electrode current collector manufacturing

A plurality of holes were formed in aluminum foil (with a thickness of 20 µm) using a punching method. The holes had the same diameter of 250 µm, and a cross section of the hole had a circular shape. The positive electrode current collector of FIG. 2A was manufactured by adjusting a hole area ratio in a region in which a tab was expected to be attached to the aluminum foil to 30% and hole area ratios in the remaining regions, excluding the region in which the tab was expected to be attached to the aluminum foil, to 60%.

### Negative electrode current collector manufacturing

A plurality of holes were formed in copper foil (with a thickness of 20 µm) using a punching method. The holes had the same diameter of 250 µm, and a cross section of the hole had a circular shape. The negative electrode current collector of FIG. 2B was manufactured by adjusting a hole area ratio in a region in which a tab was expected to be attached to the copper foil to 40% and hole area ratios in the remaining regions, excluding the region in which the tab was expected to be attached to the copper foil, to 60%.

A lithium secondary battery was manufactured in the same manner as in Example 1 using the manufactured current collector.

For the manufactured battery, current density was evaluated relative to a temperature distribution.

A current density ratio of a region in which a hole area ratio was 30% of the positive electrode current collector to a region in which a hole area ratio was 60% of the positive electrode current collector was 6: 1. A current density ratio of a region in which a hole area ratio was 40% of the negative electrode current collector to a region in which a hole area ratio was 60% of the negative electrode current collector was 6:1. Comparative Example 1 has a higher current density ratio compared to Examples 1 and 2 so that an effect of resolving the current density imbalance on the surface of the electrode plate is expected to be relatively low.

As described above, although the exemplary embodiments of the present invention have been described in detail, the present invention is not limited to these embodiments, and various modifications can be practiced within the scope of the appended claims, and the detailed description of the present invention, and the accompanying drawings and these modifications also fall within the scope of the present invention.

## Claims

1. An electrode assembly for a lithium secondary battery (100), comprising:
a negative electrode including a negative electrode current collector (21) having one end portion on which a negative electrode tab (23) is formed and a negative electrode active material layer (22) positioned on at least one surface of the negative electrode current collector (21); and
a positive electrode including a positive electrode current collector (11) having one end portion on which a positive electrode tab (13) is formed and a positive electrode active material layer (12) positioned on at least one surface of the positive electrode current collector (11),
wherein when a voltage is applied to the electrode assembly, in each of the negative electrode and the positive electrode, a region (11A, 21A) with a high current density and a region (11B, 21B) with a low current density are present, and
wherein the electrode assembly is configured such that an overall hole area ratio in the regions (11A, 21A) with the high current density is greater than the overall hole area ratio in the regions (11B, 21B) with the low current density.

2. The electrode assembly of claim 1, wherein, when a voltage of 3 V to 4.5 V is applied to the electrode assembly, in the negative electrode and the positive electrode,
a temperature of the region (11A, 21A) with the high current density is 60 °C or more; and
a temperature of the region (11B, 21B) with the low current density is less than 60 °C.

3. The electrode assembly of claim 1 or 2, wherein:
the region (21A) with the high current density of the negative electrode is a region in which the negative electrode tab (23) is formed among a plurality of regions (21A, 21B) obtained by equally dividing the negative electrode current collector (21) into n regions, with n being an integer from 4 to 20, and the region (21B) with the low current density is the remaining region (21B) of the negative electrode excluding the region (21A) with the high current density; and
the region (11A) with the high current density of the positive electrode is a region in which the positive electrode tab (13) is formed among a plurality of regions (11A, 11B) obtained by equally dividing the positive electrode current collector (11) into n regions, with n being an integer from 4 to 20, and the region (11B) with the low current density is the remaining region (11B) of the positive electrode excluding the region (11A) with the high current density.

4. The electrode assembly of any one of claims 1 to 3, wherein, in each of the negative electrode and the positive electrode, regions in which the hole area ratios are different from each other are present in the region (11A, 21A) with the high current density, and regions in which the hole area ratios are different from each other are present in the region (11B, 21B) with the low current density.

5. The electrode assembly of any one of claims 1 to 4, wherein, in each of the negative electrode and the positive electrode, the overall hole area ratio in the region (11A, 21A) with the high current density is 15% greater or more than the overall hole area ratio in the region (11B, 21B) with the low current density.

6. The electrode assembly of any one of claims 1 to 5, wherein, in each of the negative electrode and the positive electrode, the overall hole area ratio in the region (11A, 21A) with the high current density ranges from 20% to 40%; and
the overall hole area ratio in the region (11B, 21B) with the low current density ranges from 0% to 10%.

7. The electrode assembly of any one of claims 1 to 6, wherein the overall hole area ratio in the region (11A, 21A) with the high current density of the negative electrode is greater than the overall hole area ratio in the region (11B, 21B) with the high current density of the positive electrode.

8. The electrode assembly of any one of claims 1 to 7, wherein, in each of the negative electrode and the positive electrode, the hole (1, 2) is formed in each of the negative electrode current collector (21) and the positive electrode current collector (11).

9. The electrode assembly of any one of claims 1 to 8, wherein, in each of the negative electrode and the positive electrode, diameters of the holes (1) in the region (11A, 21A) with the high current density is the same as or different from those of the holes (2) in the region (11B, 21B) with the low current density.

10. The electrode assembly of any one of claims 1 to 9, wherein, in each of the negative electrode and the positive electrode, diameters of the holes (1) in the region (11A, 21A) with the high current density is smaller or greater than those of the holes (2) in the region (11B, 21B) with the low current density.

11. The electrode assembly of any one of claims 1 to 10, wherein, in each of the negative electrode and the positive electrode, the diameter of the hole (1, 2) becomes smaller or larger from the region (11A, 21A) with the high current density toward the region (11B, 21B) with the low current density.

12. The electrode assembly of any one of claims 1 to 11, wherein, in each of the negative electrode and the positive electrode, a longest diameter of the hole (1, 2) is 300 µm or less.

13. The electrode assembly of any one of claims 1 to 12, wherein, in each of the negative electrode and the positive electrode, an overall hole density in the region (11A, 21A) with the high current density is greater than the overall hole density in the region (11B, 21B) with the low current density.

14. The electrode assembly of any one of claims 1 to 13, wherein, in each of the negative electrode and the positive electrode, a hole density becomes lower from the region (11A, 21A) with the high current density toward the region (11B, 21B) with a low current density.

15. A lithium secondary battery (100) including the electrode assembly according to any one of claims 1 to 14.
